# EUROPÄISCHE PATENTSCHRIFT

(11) **EP 2 619 058 B1**
(45) Veröffentlichungstag und Bekanntmachung des Hinweises auf die Patenterteilung: **04.12.2019**
(21) Anmeldenummer: 11758174.4
(22) Anmeldetag: 12.09.2011
(51) Int. Cl.: B60T 17/04

(54) **STEUERVENTILANORDNUNG EINER DRUCKLUFTBREMSE FÜR EIN SCHIENENFAHRZEUG**
CONTROL VALVE ASSEMBLY OF AN AIR PRESSURE BRAKE FOR A RAILWAY VEHICLE
ENSEMBLE SOUPAPE DE COMMANDE D'UN FREIN À AIR COMPRIMÉ POUR UN VÉHICULE FERROVIAIRE

(30) Priorität: 20.09.2010 EA 201001386
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); KRYLOV, Vladimir, Moskau 127322 (RU)
(74) Vertreter: Schönmann, Kurt
(86) Internationale Anmeldenummer: PCT/EP2011/065731
(87) Internationale Veröffentlichungsnummer: WO 2012/038284

(56) Entgegenhaltungen:
- BE-A- 375 213
- US-A- 1 702 152
- US-A- 3 253 867

## Beschreibung

Die vorliegende Erfindung betrifft eine Steuerventilanordnung zum Anschluss mindestens eines Bremszylinders einer Druckluftbremse für ein Schienenfahrzeugen mit einem am Fahrzeug befestigten und zur Druckluftverteilung mehrere Rohranschlüsse aufweisenden Ventilträger, an dem zumindest zwei Baugruppen über je eine zugeordnete Flanschfläche lösbar befestigt sind.

Das Einsatzgebiet der vorliegenden Erfindung ist der Schienenfahrzeugbau. Schienenfahrzeuge haben meist eine selbsttätige automatische Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen ausgeführt. Daneben haben Steuerventile weitere Funktionen, die mit der Füllung, dem Abschluss und der Entlüftung von Volumen mit gespeicherter Druckluft, mit der Einstellung bestimmter statischer Kennlinien des Bremszylinderdruckes und mit der Beschleunigung der Übertragung von als Druckhöhe kodierten Signalen in der Hauptluftleitung zusammenhängen.

Schließlich kommen Funktionen hinzu, die auch bei schneller und starker Änderung des Druckes in der Hauptluftleitung eine nur allmähliche Änderung des Druckes in den Bremszylindern sichern, um den auftretenden Ruck an den Fahrzeugen und die Längskräfte innerhalb des Zuges zu begrenzen.

Steuerventile können sowohl in einem einzigen Gehäuse als auch auf mehrere Gehäuse aufgeteilt ausgeführt sein. So kann ein Steuerventil aus einem Hauptteil und einem Leitungsteil bestehen. Das Leitungsteil hat dabei eine steuernde Funktion, bei der es Referenzdrücke erzeugt, die auf das Hauptteil übertragen werden. Dieses bildet nach Maßgabe dieser Drücke den Bremszylinderdruck. Beide Teile haben weitere Funktionen. Die vorliegende Erfindung widmet sich einer speziellen Anordnung für ein derartig zwei- oder mehrteiltes Steuerventil.

Aus der DE 1 092 949 A1 geht eine Steuerventilanordnung hervor, deren Steuerventil an einem Ventilträger angeflanscht ist, der wiederum unterhalb des Wagens eines Schienenfahrzeugs am Fahrzeugrahmen lösbar befestigt ist. Am Ventilträger sind auch die Rohranschlüsse für die Druckluftleitungen angeordnet, welche zum Steuerventil gehen und von diesem aus zum Bremszylinder verlaufen. An dem Ventilträger lassen sich mehrere Druckluftaggregate anbauen. Die Ausführung als Gussteil ermöglicht es, die Druckluftleitungen und erforderlichen Verzweigungen zwischen Druckluftaggregate- und Rohranschlüssen in den Ventilträger zu integrieren und ihnen erforderlichenfalls ein genau definiertes Volumen zu geben. Die Anbaugeräte sind dank des Ventilträgers mit dem Anflanschen bereits voll pneumatisch angeschlossen. Weil das aufwendige Lösen einzelner Rohranschlüsse dank Ventilträger entfallen kann, und die Rohranschlüsse damit in unveränderter Lage bleiben können, gestaltet sich der An- und Abbau von Geräten, insbesondere eines Steuerventils, vor allem bei Wartungsarbeiten äußerst einfach und zeitsparend. Der Ventilträger umfasst neben als Druckkammer ausgebildeten zusätzlichen Volumina auch einen Absatzraum für Kondensat, welches über ein unteres Ablassventil abführbar ist.

Der Ventilträger dieses Standes der Technik ist für ein in einem einzigen Gehäuse angeordnetes Steuerventil vorgesehen, das über einer zugeordneten Flanschfläche am Ventilträger angeflanscht ist. Dabei können mehrere Flansche vorhanden sein, um alternative Bauarten ohne Wechsel des Trägers austauschen zu können. Der einen im Wesentlichen rechteckigen Querschnitt aufweisende Ventilträger richtet das angeflanschte Steuerventil dabei in Verlaufsrichtung der Rohrleitungen aus, die neben einer Hauptluftleitung auch eine Vorratsluftbehälterleitung sowie die Bremszylinderleitung umfassen.

Bei Befestigen dieses Ventilträgers am Fahrzeugrahmen unterhalb des Wagens eines Schienenfahrzeugs könnte ein Steuerventil sich seitlich in Richtung der Wagenlängsachse erstrecken. Die Schrauben der Flanschbefestigung sind in dieser Montageposition in der Regel schlecht erreichbar, was die Montage und Demontage des Steuerventils erschwert. Insbesondere könnte der Monteur gezwungen sein, zur Montage unter das Fahrzeug zu treten, was die Arbeit erschwert und gefährlicher macht. Ferner besitzt der Ventilträger aufgrund seiner geometrischen Gestalt einen recht tiefen Schwerpunkt, welcher zu einer hohen Belastung im Bereich der Aufhängung am Fahrzeugrahmen führt. Damit diese Belastung nicht zu Schraubenbrüchen führt, sind die Befestigungsschrauben recht groß zu dimensionieren.

Aus dem Fachbuch "Asadtschenko, V.R.: Avtomatitscheskije Tormosa podvishnogo Sostawa sheleznogo Transporta" (russ.), Moskau 2002, Seite 50 ff geht ein Ventilträger hervor, an dem ein zweiteiliges Steuerventil, bestehend aus Leitungsteil und Hauptteil, an verschiedenen je zugeordnete Flanschflächen lösbar angebracht ist. An den im Querschnitt in etwa quadratischen Ventilträger sind die Flanschflächen parallel einander gegenüberliegend angeordnet. Hierdurch bedingt stehen das Leitungsteil einerseits und das Hauptteil andererseits seitlich vom Ventilträger ab, und zwar in Wagenverlaufsrichtung oder in Verlaufsrichtung der Hauptluftleitung. Auch bei dieser Steuerventilanordnung besteht somit der Nachteil einer ungünstigen Zugänglichkeit für die Montage oder Demontage des angeflanschten Leitungsteils sowie Hauptteils. Weiter ergibt sich ein Nachteil für die Funktion des Steuerventils, wenn dessen Achse in Fahrtrichtung weist, weil in dieser Richtung möglicherweise sehr starke Stöße auftreten.

Eine weitere Steuerventilanordung ist durch die Veröffentlichung "Die Entwicklung der Bremsausrüstung verbessern" von S.I. Afanasjev in der Zeitschrift "Waggons und Wagonwirtschaft" (russ.) Nr. 2 2009 bekannt. Bei dieser Steuerventilanordung sind Leitungsteil und Hauptteil parallel nebeneinander auf einer ebenen Trägerplatte montiert. Hierdurch entfallen einige der eingangs genannten Nachteile. Als Nachteil erscheint jedoch, dass der verwendete Träger gegen seinen Vorgänger, bekannt aus der bereits genannten Veröffentlichung von Asadchenko, am Fahrzeug aufgrund seiner Geometrie nicht ohne weiteres austauschbar ist. Da die Konstruktion der Waggons möglichst nicht in Abhängigkeit vom jeweils verfügbaren Träger geändert werden soll, ist die Einführung eines solchen Trägers außerordentlich erschwert und mit hohem Aufwand verbunden. Weiterhin ergibt sich durch die parallel angeordneten Baugruppen am Träger, dass die Zugänglichkeit der benachbarten Befestigungsschrauben der Teile durch Maulschlüsse sehr erschwert ist. Schließlich weist dieser Träger auf seiner Rückseite vielteilige Funktionselemente und Volumen auf, deren Herstellung, Montage , Abdichtung und Instandhaltung über einen großen Lebenszyklus sehr aufwendig ist.

Dokument US 1 702 152 A offenbart eine Steuerventilanordnung nach dem Oberbegriff des Anspruchs 1

Es ist daher Aufgabe der vorliegenden Erfindung, einen Ventilträger zu schaffen, der austauschbar gegen eine konventionelle Anordnung ist, und dessen Steuerventile und ihre Befestigungsschrauben gut zugänglich sind.

Die Aufgabe wird ausgehend von einer Steuerventilanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung an.

Der Vorteil der erfindungsgemäßen Lösung liegt insbesondere darin, dass beide Ventilteile überwiegend frontseitig am Ventilträger angebracht sind. Die spezielle Anbringungsposition gestattet zum Einen eine gute Zugänglichkeit für Montagearbeiten, da alle Schraubverbindungen direkt von der Wagenseite des Schienenfahrzeugs her zugänglich sind, und keines der Teile die Zugänglichkeit zu den Befestigungsschrauben des anderen behindert. Andererseits stehen die am erfindungsgemäßen Ventilträger anzubringenden Ventilteile nicht extrem vom Ventilträger ab, so dass ein hinreichender Schutz vor äußerer Beschädigung von der Wagenflankenseite her gegeben ist. Da sich die erfindungsgemäße Lösung beim Ventilträger in erster Linie an dessen Frontseite verwirklicht, bleiben insbesondere Rückseite und Oberseite derart unverändert, dass volle Kompatibilität mit üblichen Konstruktionen hinsichtlich Rohranschlüssen und Befestigung am Fahrzeugrahmen gegeben ist. Somit eignet sich der erfindungsgegenständliche Ventilträger auch als Austauschteil zu herkömmlichen Ventilträgern des Standes der Technik, welche die eingangs beschriebenen Nachteile aufweisen.

Versuche in Verbindung mit üblichen Leitungsteilen und Hauptteilen haben ergeben, dass der Winkel zwischen den beiden Flanschflächen im Bereich zwischen 110° bis 120° liegen sollte, um die maximalen Vorteile zu erreichen. In diesem engen Winkelbereich besteht ein optimales Verhältnis zwischen guter Zugänglichkeit und Kompaktheit der gesamten Steuerventilanordnung.

Ebenso hat es sich als besonders vorteilhaft erwiesen, wenn die beiden benachbarten Flächen , auf welchen Haupt- bzw. Leitungstei montiert sind, in etwa gleich groß ausgebildet sind.

Zur Realisierung einer ventilträgerinternen Kanalführung bietet es sich an, den Ventilträger als ein Metallgussteil mit inneren Druckkammern und/oder Druckkanälen zur Druckluftverteilung auszubilden. Zumindest die Flanschflächen sowie die Rohranschlüsse unterliegen dabei einer spanenden Nachbearbeitung. Insgesamt lässt sich der erfindungsgemäße Ventilträger verfahrenstechnisch effizient herstellen. Das Material des einteiligem Metallgussteils ist vorzugsweise Grauguss , Sphäroguss oder Aluminiumguß. Damit wird der Vorteil erzielt, dass bei der Herstellung des Trägers alle erforderlichen druckluftführenden Volumen und deren Verbindungen ohne Notwendigkeit dichter Montagen bereits enthalten sind, wodurch die Dichtheit über die gesamte Lebensdauer des Schienenfahrzeugs begünstigt wird.

Ein derart als Metallgussteil hergestellter Ventilträger ist an der Rückseite vorzugsweise mit einem Rohranschluss für eine Hauptluftleitung, einem Rohranschluss für eine Leitung zum Vorratsluftbehälter und einem Rohranschluss für eine Bremszylinderleitung in Form von Rohrverschraubungen versehen. Daneben ist es auch denkbar, weitere Druckluftleitungen und dergleichen über Rohrverschraubungen oder andere Befestigungsmittel am Ventilträger anzubringen, wozu sich ebenfalls die Rückseite als einheitliche Montagefläche eignet. Durch diese rückwärtige Anordnung der Rohranschlüsse lässt sich volle Kompatibilität zu herkömmlichen Ventilträgern erzielen.

Unter dem Aspekt der Kompatibilität mit herkömmlichen Ventilträgern wird ferner vorgeschlagen, dass der Ventilträger an der Oberseite eine direkt durch Angießen angeformte und mit mehreren Bohrungen versehene horizontal verlaufende flache Befestigungsplatte besitzt. Über die Befestigungsplatte erfolgt das Anschrauben des Ventilträgers am Fahrzeugrahmen, wobei der Ventilträger durch diese Maßnahme insgesamt in der Höhenerstreckung recht gedrungen ausführbar ist. Die erfindungsgemäße Lösung gestattet es im Unterschied zum Stand der Technik sogar, dass der Ventilträger ein größeres Breitenmaß als das Höhenmaß erhält, so dass eine recht hohe Schwerpunktlage realisiert wird, welche die Schraubbefestigung zum Fahrzeugrahmen relativ gering belastet.

Gemäß einer anderen, die Erfindung verbessernden Maßnahme wird vorgeschlagen, dass an einer zur Flanschfläche des Leitungsteils benachbarten Schmalseite ein Absperrventil angeordnet wird, mit dem sich das Steuerventil außer Betrieb setzen läßt. An dieser Montagestelle ist das Absperrventil damit seitlich am Ventilträger angebracht, so dass dessen abgewinkelter Handgriff ergonomisch günstig gegenüber einem Bediener angeordnet ist. Vorzugsweise weist der Ventilträger zwei zueinander parallelverlaufende gegenüberliegende Schmalseiten auf. Hierdurch ergibt sich ein in etwa symmetrischer fünfeckiger Querschnitt. Die mindestens eine Schmalseite am Ventilträger kann natürlich auch zur Anbringung anderer Druckluftgeräte, Messgeräte, Sensoren und dergleichen Anbauteile verwendet werden. Die gegenüberliegende Schmalseite, welche zum zweiten Ventilteil benachbart angeordnet ist, wird vorzugsweise zur Anbringung eines Entlüftungsventils verwendet.

Die parallel zur Oberseite verlaufende Unterseite des Ventilträgers eignet sich zur Anbringung mindestens einer Ablassschraube zum Entfernen von Kondensatrückständen und Anbringung eines austauschbaren Filtereinsatzes.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine erste perspektivische Vorderansicht einer Steuerventilanordnung mit Ventilträger,
- Fig.2: eine zweite perspektivische Vorderansicht der Steuerventilanordnung nach Fig.1,
- Fig.3: eine Seitenansicht auf die Rückseite des Ventilträgers gemäß Fig.1, und

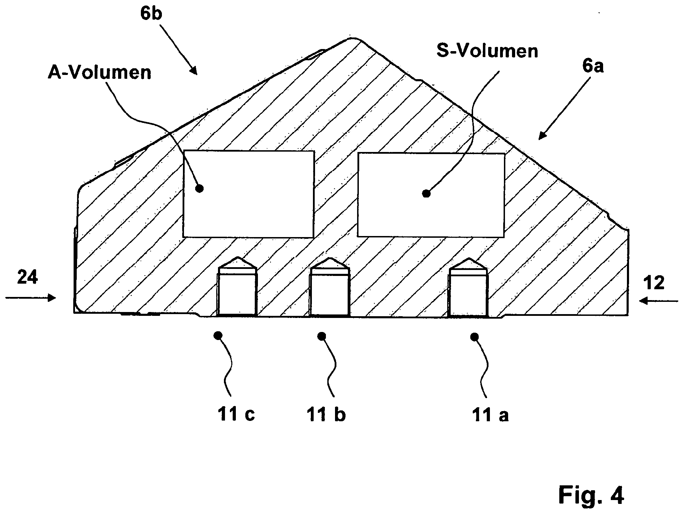

- Fig.4: einen Querschnitt des Ventilträgers gemäß Fig.1.

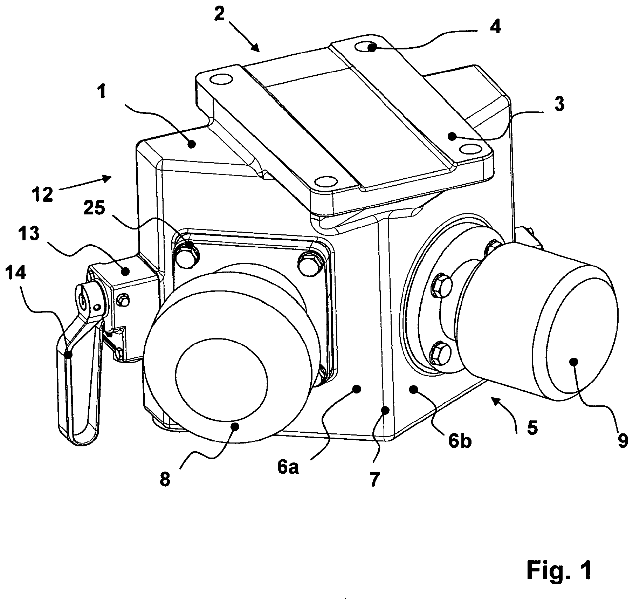

Nach Fig.1 weist ein Ventilträger 1 aus Graugussmaterial zur Befestigung an einem - hier nicht dargestellten - Fahrzeugrahmen an der Oberseite 2 eine angeformte horizontal verlaufende Befestigungsplatte 3 auf. Die Befestigungsplatte 3 besitzt eine in etwa rechteckige Grundform und ist im Bereich der Ecken mit jeweils einer Bohrung 4 versehen, worüber die Verschraubung erfolgt.

An einer zur Seitenfläche des - hier nicht weiter dargestellten - Wagens des Schienenfahrzeuges ausgerichteten Frontseite 5 des Ventilträgers 1 sind zwei zueinander benachbarte Flanschflächen 6a und 6b angeordnet, die in einem stumpfen Winkel von hier ca. 115° zueinander verlaufen und eine gemeinsame vertikale Gehäusekante 7 einschließen. Die beiden benachbarten Flanschflächen 6a und 6b haben in etwa denselben Flächeninhalt. Ein Leitungsteil 8 ist über die eine Flanschfläche 6a an dem Ventilträger 1 angeflanscht. Ein Hauptteil 9 ist über die andere Flanschfläche 6b an den Ventilträger 1 angeflanscht. Durch das mittels einzelner Befestigungsschrauben hergestellte Anflanschen des Leitungsteils 8 sowie des Hauptteils 9 werden auch die erforderlichen Druckmittelverbindungen über den Ventilträger 1 hergestellt.

An einer zur Flanschfläche 6a des Leitungsventils 8 benachbarten Schmalseite 12 ist außerdem ein Absperrventil 13 angeordnet. Dieses ist mit einem Handgriff 14 ausgestattet, der sich um etwa 90° schwenken lässt, um die Bremse des Fahrzeugs auszuschalten..

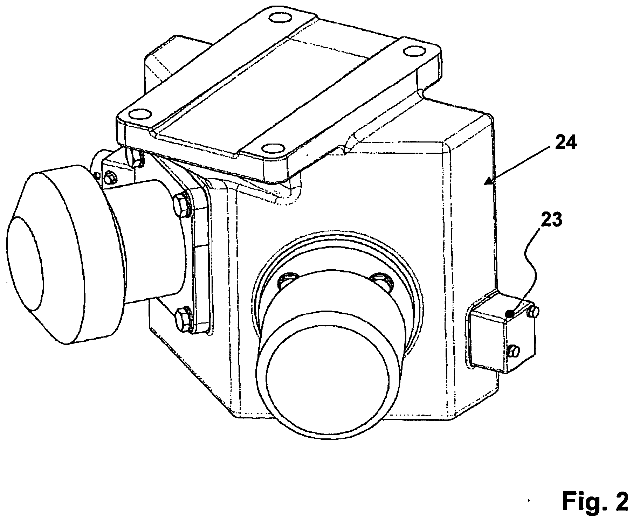

Aus Fig. 2 geht eine Ansicht des Ventilträgers 1 hervor, welche eine der Schmalseite 12 gegenüberliegende weitere Schmalseite 24 zeigt, an der ein Entlüftungsventil 23 angebracht ist.

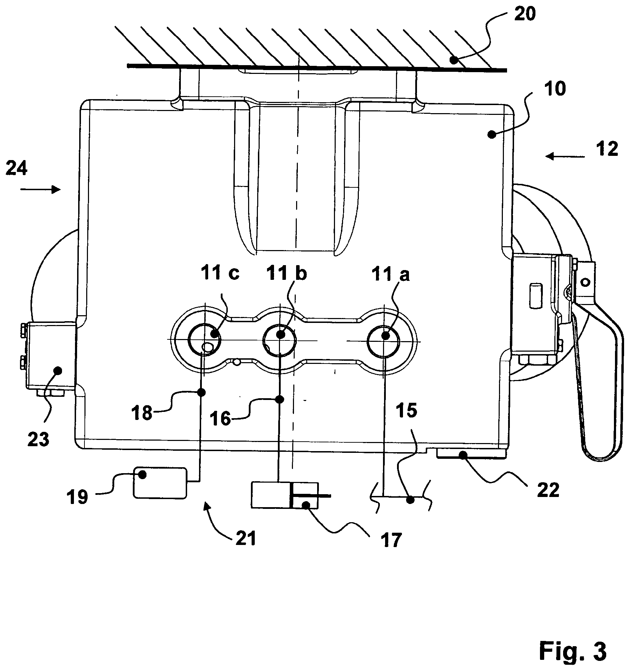

Gemäß Fig.3 sind an der Rückseite 10 des Ventilträgers 1 drei Rohranschlüsse 11a - 11c angeordnet.

Der Rohranschluss 11a an der Rückseite 10 des Ventilträgers 1 dient dem Anschluss einer - nur schematisch dargestellten - Hauptluftleitung 15. Der hierzu benachbarte Rohranschluss 11b ist zum Anschluss einer Bremszylinderleitung 16 vorgesehen, über welche ein Bremszylinder 17 der Bremszylinderanlage druckbeaufschlagt wird. Schließlich dient der verbleibende Rohranschluss 11c dem Anschluss einer Vorratsluftbehälterleitung 18, über welche von einem Druckbehälter 19 ausgehend die Vorratsluft zum Betrieb des Bremszylinders 17 bereitgestellt wird. Alle Rohranschlüsse 11a-11c sind in Form von Verschraubungen ausgeführt.

Parallel zur Oberseite 2, an welcher die Befestigungsplatte 3 zum Anschrauben des Ventilträgers 1 am Fahrzeugrahmen 20 (schematisch) angeordnet ist, verläuft eine Unterseite 21, die mit einer Ablassschraube 22 zum Entfernen von Kondensatorrückständen aus dem Inneren des Ventilträgers 1 versehen ist.

In Fig.3 ist im Schnitt das Innere des Ventilträgers 1 veranschaulicht. Dieses besteht aus verschiedenen Druckkammern - insbesondere eine A-Volumen und einem S-Volumen - für die Referenzdrücke, die das Steuerventil für seine Arbeit benötigt, sowie Druckkanälen, zur Verbindung der Steuerventilteile mit den äußeren Anschlüssen und den Druckkammern.

Die Erfindung ist nicht beschränkt auf das vorstehend beschriebene bevorzugte Ausführungsbeispiel. Es sind vielmehr auch Abweichungen hiervon denkbar, welche im Schutzbereich der nachfolgenden Ansprüche liegen. Insbesondere können außer dem an der Schmalseite 12 angebrachten Absperrventil 13 auch weitere Geräte am Ventilträger 1 befestigt und über diesen in das Druckluftsystem eingebunden werden.

### Bezugszeichenliste

- 1: Ventilträger
- 2: Oberseite
- 3: Befestigungsplatte
- 4: Bohrung
- 5: Frontseite
- 6: Flanschfläche
- 7: Gehäusekante
- 8: Leitungsteil
- 9: Hauptteil
- 10: Rückseite
- 11: Rohranschluss
- 12: Schmalseite
- 13: Absperrventil
- 14: Handgriff
- 15: Hauptluftleitung
- 16: Bremszylinderleitung
- 17: Bremszylinder
- 18: Vorratsluftbehälterleitung
- 19: Druckbehälter
- 21: Unterseite
- 22: Ablassschraube
- 23: Entlüftungsventil
- 24: Schmalseite
- 25: Schraubverbindung

## Patentansprüche

1. Steuerventilanordnung zum Anschluss mindestens eines zugeordneten Bremszylinders (17) einer Druckluftbremse für ein Schienenfahrzeug mit einem von außen her zugänglich an einem Fahrzeugrahmen befestigbaren und zur Druckluftverteilung mehrere Rohranschlüsse (11a, 11b, 11c) aufweisenden Ventilträger (1), an dem zumindest ein erstes Ventilteil und ein zweites Ventilteil über je zugeordnete Flanschflächen (6a; 6b) lösbar befestigt sind,
**dadurch gekennzeichnet, dass** die beiden Flanschflächen (6a, 6b) des Ventilträgers (1) unter Bildung einer gemeinsamen an einer Frontseite (5) gelegenen vertikalen Gehäusekante (7) benachbart zueinander angeordnet sind, wobei der Winkel zwischen den beiden Flanschflächen (6a, 6b) kleiner als 120° und größer als 110° ist.

2. Steuerventilanordnung nach Anspruch 1,
**dadurch gekennzeichnet, dass** das erste Ventilteil ein Leitungsteil (8) und das zweite Ventilteil ein Hauptteil (9) der Steuerventilanordnung sind.

3. Steuerventilanordnung nach einem der Ansprüche 1 bis 2, **dadurch gekennzeichnet, dass** der Ventilträger (1) als ein Metallgussteil mit inneren Druckkammern und/oder -kanälen zur Druckluftverteilung ausgebildet ist, wobei zumindest die Flanschflächen (6a, 6b) und die Rohranschlüsse (11a, 11b, 11c) spanend bearbeitet sind.

4. Steuerventilanordnung nach einem der Ansprüche 1 bis 3, **dadurch gekennzeichnet, dass** an einer Rückseite (10) des Ventilträgers (1) ein Rohranschluss (11a) für eine Hauptluftleitung (15), ein Rohranschluss (11b) für eine Bremszylinderleitung (18) und ein Rohranschluss (11c) für eine Leitung (19) zum Vorratsluftbehälter in Form von Rohrverschraubungen angeordnet sind.

5. Steuerventilanordnung nach einem der Ansprüche 1 bis 4, **dadurch gekennzeichnet, dass** der Ventilträger (1) an einer Oberseite (2) eine angeformte und mit mehreren Bohrungen (4) versehene horizontal verlaufende Befestigungsplatte (3) zum Anschrauben des Ventilträgers (1) am Fahrzeugrahmen aufweist.

6. Steuerventilanordnung nach einem der Ansprüche 1 bis 5, **dadurch gekennzeichnet, dass** an einer parallel zur Oberseite (2) verlaufenden Unterseite (21) des Ventilträgers (1) mindestens eine Ablassschraube (22) zum Entfernen von Kondensatrückständen angeordnet ist.

7. Steuerventilanordnung nach einem der Ansprüche 1 bis 6, **dadurch gekennzeichnet, dass** an einer zur Flanschfläche (6a) des ersten Ventilteils (8) benachbarten Schmalseite (12) ein Absperrventil (13) angeordnet ist.

8. Steuerventilanordnung nach einem der Ansprüche 1 bis 7, **dadurch gekennzeichnet, dass** an einer zur Flanschfläche (6b) des zweiten Ventilteils (9) benachbarten Schmalseite (24) ein Entlüftungsventil (23) angeordnet ist.

9. Druckluftbremse für ein Schienenfahrzeug mit mindestens einem Bremszylinder (18), umfassend mindestens eine Steuerventilanordnung nach einem der vorstehenden Ansprüche.

## Claims

1. Control valve arrangement for connecting at least one associated brake cylinder (17) of a compressed-air brake for a rail vehicle to an externally accessible valve carrier (1) which can be fastened to a vehicle frame and which, for compressed-air distribution, has a plurality of pipe connectors (11a, 11b, 11c) and to which at least one first valve part and one second valve part are detachably fastened via respectively associated flange surfaces (6a; 6b),
**characterized in that** the two flange surfaces (6a, 6b) of the valve carrier (1) are arranged adjacent to one another so as to form a common, vertical housing edge (7) situated on a front side (5), wherein the angle between the two flange surfaces (6a, 6b) is less than 120° and greater than 110°.

2. Control valve arrangement according to Claim 1,
**characterized in that** the first valve part is a line part (8) and the second valve part is a main part (9) of the control valve arrangement.

3. Control valve arrangement according to either of Claims 1 and 2,
**characterized in that** the valve carrier (1) is in the form of a cast metal part with internal pressure chambers and/or ducts for compressed-air distribution, wherein at least the flange surfaces (6a, 6b) and the pipe connectors (11a, 11b, 11c) are machined in a chip-removing process.

4. Control valve arrangement according to one of Claims 1 to 3, **characterized in that** a pipe connector (11a) for a main air line (15), a pipe connector (11b) for a brake cylinder line (18) and a pipe connector (11c) for a line (19) to the supply air vessel are arranged in the form of screw-type pipe connections on a rear side (10) of the valve carrier (1).

5. Control valve arrangement according to one of Claims 1 to 4,
**characterized in that** the valve carrier (1) has, on a top side (2), an integrally formed, horizontally running fastening plate (3), which is provided with a plurality of bores (4), for the screw connection of the valve carrier (1) to the vehicle frame.

6. Control valve arrangement according to one of Claims 1 to 5,
**characterized in that** at least one drain screw (22) for the removal of condensate residues is arranged on an underside (21), which runs parallel to the top side (2), of the valve carrier (1).

7. Control valve arrangement according to one of Claims 1 to 6,
**characterized in that** a shut-off valve (13) is arranged on a narrow side (12) which is adjacent to the flange surface (6a) of the first valve part (8).

8. Control valve arrangement according to one of Claims 1 to 7,
**characterized in that** a ventilation valve (23) is arranged on a narrow side (24) which is adjacent to the flange surface (6b) of the second valve part (9).

9. Compressed-air brake for a rail vehicle having at least one brake cylinder (18), comprising at least one control valve arrangement according to one of the preceding claims.

## Revendications

1. Dispositif de soupape de commande pour le raccordement d'au moins un cylindre (17) de frein associé d'un frein à air comprimé d'un véhicule ferroviaire, comprenant un support (1) de soupape, pouvant être fixé en étant accessible de l'extérieur à un châssis du véhicule et ayant plusieurs raccords (11a, 11b, 11c) tubulaires de répartition de l'air comprimé, support (1) auquel sont fixées, de manière amovible, au moins une première partie de soupape et une deuxième partie de soupape par, respectivement, des faces (6a ; 6b) de bridage associées,
**caractérisé en ce que** les deux faces (6a, 6b) de bridage du support (1) de soupape sont disposées en étant voisines l'une de l'autre, en formant une arête (7) d'enveloppe verticale commune sur un côté (5) avant, l'angle entre les deux faces (6a, 6b) de bridage étant plus petit que 120° et plus grande que 110°.

2. Agencement de soupape de commande suivant la revendication 1,
**caractérisé en ce que** la première partie de soupape est une partie (8) de conduit et la deuxième partie de soupape une partie (9) principale de l'agencement de soupape de commande.

3. Agencement de soupape de commande suivant l'une des revendications 1 à 2,
**caractérisé en ce que** le support (1) de soupape est constitué sous la forme d'une pièce coulée en métal ayant des chambres et/ou des canaux intérieurs de pression pour la répartition de l'air comprimé, au moins les faces (6a, 6b) de bridage et les raccords (11a, 11b, 11c) tubulaires étant usinés avec enlèvement de copeaux.

4. Agencement de soupape de commande suivant l'une des revendications 1 à 3,
**caractérisé en ce que**, sur un côté (10) arrière du support (1) de soupape, sont disposés un raccord (11a) tubulaire pour un conduit (15) d'air principal, un raccord (11b) tubulaire pour un conduit (18) de cylindre de frein et un raccord (11c) tubulaire pour un conduit (19) menant à un récipient d'air de réserve sous la forme de vissages tubulaires.

5. Agencement de soupape de commande suivant l'une des revendications 1 à 4,
**caractérisé en ce que** le support (1) de soupape a, sur son côté (2) supérieur, pour le vissage du support (1) de soupape, un plateau (3) de fixation s'étendant horizontalement, venu de matière et pourvu de plusieurs trous (4).

6. Agencement de soupape de commande suivant l'une des revendications 1 à 5,
**caractérisé en ce que**, sur un côté (21) inférieur, s'étendant parallèlement au côté (2) supérieur du support (1) de soupape, est disposée au moins une vis (22) d'évacuation pour l'évacuation de résidus de condensat.

7. Agencement de soupape de commande suivant l'une des revendications 1 à 6,
**caractérisé en ce qu'**un robinet (13) d'arrêt est monté sur un côté (12) étroit, voisin de la face (6a) de bridage de la première partie (8) de la soupape.

8. Agencement de soupape de commande suivant l'une des revendications 1 à 7,
**caractérisé en ce qu'**une soupape (23) de purge est montée sur un côté (24) étroit, voisin de la face (6b) de bridage de la deuxième partie (9) de la soupape.

9. Frein à air comprimé d'un véhicule ferroviaire, ayant au moins un cylindre (18) de frein, comprenant au moins un agencement de soupape de commande suivant l'une des revendications précédentes.
